# EUROPÄISCHE PATENTSCHRIFT

(11) **EP 2 354 607 B1**
(45) Veröffentlichungstag und Bekanntmachung des Hinweises auf die Patenterteilung: **19.09.2012**
(21) Anmeldenummer: 10192163.3
(22) Anmeldetag: 23.11.2010
(51) Int. Cl.: F16K 11/074, F16K 31/00, F16K 3/08, F16K 3/10

(54) **Schieberventil**
Gate valve
Soupape à tiroir

(30) Priorität: 22.01.2010 DE 102010001132
(43) Veröffentlichungstag der Anmeldung: 10.08.2011
(73) Patentinhaber: Robert Bosch GmbH, 70442 Stuttgart (DE)
(72) Erfinder: Schubert, Peter, 74211, Leingarten (DE); Bohman, Carl, 70176, Stuttgart (DE); Urlaub, Sven, 77839, Lichtenau (DE)

(56) Entgegenhaltungen:
- WO-A1-2008/058792
- AT-B- 309 936
- DE-A1- 3 007 601
- DE-U1- 8 622 665

## Beschreibung

### Stand der Technik

Kraftfahrzeuge verfügen üblicherweise über einen oder mehrere Kühlmittelkreisläufe, mittels derer ein Wärmehaushalt des Kraftfahrzeugs innerhalb und außerhalb einer Fahrgastzelle gesteuert wird. Zur Unterstützung unterschiedlicher Betriebsbedingungen erfolgt eine Verteilung erzeugter und benötigter Wärme durch eine entsprechende Verteilung eines Kühlmittelstroms mittels eines oder mehrerer Ventile. Gesteuerte Ventile umfassen Thermostate, die in Abhängigkeit einer Temperatur des Kühlmittels Durchlässe in den Kühlkreisläufen öffnen oder schließen. Arbeitet ein solches Ventil fehlerhaft, so kann ein Folgeschaden beispielsweise eines Antriebsmotors des Kraftfahrzeugs durch Überhitzen nicht ausgeschlossen werden.

Der Erfindung liegt die Aufgabe zugrunde, ein Ventil zur Steuerung eines Flüssigkeitsstroms anzugeben, welches auch im Fehlerfall eine Mindestkühlung sicherstellt.

### Offenbarung der Erfindung

Die Aufgabe wird gelöst durch ein Schieberventil mit den Merkmalen nach Anspruch 1, durch einen Verbrennungsmotor mit den Merkmalen des Anspruchs 8 und durch ein Verfahren mit den Merkmalen nach Anspruch 9. Unteransprüche geben vorteilhafte Ausführungsformen an.

Erfindungsgemäß umfasst ein Schieberventil zur Steuerung eines Flüssigkeitsstroms eine Anlagefläche mit einer Öffnung für den Flüssigkeitsstrom und einen an der Anlagefläche anliegenden Schieber, wobei der Schieber dazu eingerichtet ist, den Flüssigkeitsstrom durch die Öffnung in Abhängigkeit einer Stellung des Schiebers bezüglich der Anlagefläche freizugeben. Ferner umfasst das Schieberventil ein Hubelement, das dazu eingerichtet ist, den Schieber von der Anlagefläche abzuheben, falls eine Temperatur des Hubelements eine vorbestimmte Temperatur übersteigt.

Vorteilhafterweise ist die Schiebebewegung des Schiebers unabhängig von der Hubbewegung des Schiebers, beispielsweise indem die Bewegungsrichtungen aufeinander senkrecht stehen. Dadurch kann sichergestellt werden, dass der Schieber in jeder Stellung und sogar während einer Schiebebewegung durch das Hubelement von der Anlagefläche abgehoben werden kann, um den Flüssigkeitsstrom durch die Öffnung zu ermöglichen. Weiter vorteilhafterweise kann das Schieberventil derart ausgelegt werden, dass der Schieber mehrere Öffnungen mehrerer Anlageflächen für mehrere Flüssigkeitsströme in Abhängigkeit seiner Stellung bezüglich dieser Anlageflächen freigibt und das Hubelement den Schieber von allen Anlageflächen gleichermaßen abhebt und somit einen Flüssigkeitsstrom durch jede der Öffnungen ermöglicht. Auf diese Weise können mehrere Wärmesenken, etwa eine Innenraumheizung und ein Radiator des Kraftfahrzeugs, einen Strom von erhitztem Kühlmittel aufnehmen, so dass die Wärme des Kühlmittels zuverlässig abtransportiert werden kann und Komponenten, die Wärme in den Flüssigkeitsstrom eintragen, wie beispielsweise ein Antriebsmotor oder ein Turbolader, nicht überhitzen.

Das Hubelement kann dazu eingerichtet sein, den Schieber an die Anlagefläche anzupressen, falls die Temperatur des Hubelements eine weitere vorbestimmte Temperatur unterschreitet. So kann ein Zweipunktregler (Thermostat) aufgebaut sein, mithilfe dessen die Temperatur des Hubelements in einem vorbestimmten Bereich zwischen den beiden vorbestimmten Temperaturen gehalten wird. Das Hubelement kann thermisch mit dem Antriebsmotor des Kraftfahrzeugs verbunden sein, so dass auch dann, wenn eine Schieberbewegung nicht oder nur eingeschränkt möglich ist, eins Steuerung gegen Über- und Untertemperatur des Flüssigkeitsstroms bereitgestellt werden kann.

Der Schieber kann ein Drehschieber mit einer Drehachse sein und das Abheben des Drehschiebers von der Anlagefläche kann durch ein Bewegen des Drehschiebers entlang der Drehachse erfolgen. Drehschieberventile zur Steuerung von Flüssigkeitsströmen in Kraftfahrzeugen sind bekannt, so dass vorteilhafterweise ein bestehendes Drehschieberventil um das erfindungsgemäße Hubelement erweitert werden kann.

Zum Drehen des Drehschiebers kann eine Verdreheinrichtung mit einer koaxial zur Drehachse verlaufenden Welle vorgesehen sein, wobei das Hubelement auf einer von der Verdreheinrichtung abgewandten Seite des Drehschiebers angeordnet ist. So kann gewährleistet werden, dass die Verdreheinrichtung der Temperatur des Kühlmittels nicht ausgesetzt ist und trotzdem einem Transport von Wärme zum Hubelement nicht im Weg steht. Dadurch kann die Verdreheinrichtung einer niedrigeren durchschnittlichen Temperatur als das Hubelement ausgesetzt sein, wodurch eine Lebensdauer der Verdreheinrichtung gesteigert sein kann.

Das Hubelement kann einen Ausdehnungskörper umfassen, der zwischen einer Stirnseite der Welle und einem die Stirnseite der Welle überspannenden Stützelement des Drehschiebers angeordnet ist. Vorteilhafterweise kann so für den Ausdehnungskörper ein Element mit einem positiven thermischen Ausdehnungskoeffizienten verwendet werden, was leichter zu implementieren ist als ein Element mit einem negativen thermischen Ausdehnungskoeffizienten.

Der Ausdehnungskörper kann eine Füllung umfassen, die Paraffin enthält. Das Ausdehnungsverhalten von Paraffin bei unterschiedlichen Temperaturen ist wohlbekannt und eignet sich zum Aufbau eines Zweipunktreglers.

Der Drehschieber und die Welle können miteinander in Eingriff stehende Verzahnungen aufweisen. Wahlweise kann die Verzahnung derart gestaltet sein, dass bei Abheben des Schiebers von der Anlagefläche die Verzahnungen miteinander im Eingriff bleiben oder sich voneinander trennen, so dass ein Drehmomentschluss zwischen der Welle und dem Schieber aufgehoben ist. In jedem Fall ermöglichen die Verzahnungen eine einfache drehmomentschlüssige Verbindung der Welle mit dem Schieber, die einer durch das Hubelement gesteuerten Bewegung des Schiebers nicht entgegensteht.

Ferner umfasst ein flüssigkeitsgekühlter Verbrennungsmotor das oben beschriebene Schieberventil.

Ein Verfahren zur Steuerung des oben beschriebenen Schieberventils umfasst Schritte des Erfassens eines Abhebens des Schiebers von der Anlagefläche und des Aktivierens einer Warnvorrichtung. So kann ein Fahrer des Kraftfahrzeugs auf einen vorliegenden Defekt des Schieberventils aufmerksam gemacht werden, auch wenn unter Umständen die wesentliche Funktion des Schieberventils für den Fahrer nicht merklich beeinträchtigt wird. Ferner kann der Antriebsmotor des Kraftfahrzeugs derart gesteuert werden, dass bei erfasstem Abheben des Schiebers von der Anlagefläche nur noch eine beschränkte Leistung durch den Antriebsmotor abgegeben wird. Dadurch kann zugleich eine durch den Antriebsmotor in den Flüssigkeitsstrom eingetragene Wärmemenge beschränkt werden, so dass bei eingeschränkter Kühlfunktion ein Notbetrieb des Kraftfahrzeugs immer noch möglich ist.

### Kurze Beschreibung der Figuren

Die Erfindung wird nun mit Bezug auf die beigefügten Figuren genauer beschrieben, in denen:
Fig. 1 einen schematischen Überblick über einen Kühlmittelkreislauf;
Fig. 2 einen schematischen Querschnitt durch das Drehschieberventil aus Fig. 1 im Normalbetrieb;
Fig. 3 einen schematischen Querschnitt durch das Drehschieberventil aus Fig. 2 im Notbetrieb; und
Fig. 4 ein schematisches Ablaufdiagramm eines Verfahrens zur Steuerung des Schieberventils aus den Figuren 2 und 3 im Kühlkreislauf aus Fig. 1
zeigen.

### Genaue Beschreibung eines Ausführungsbeispiels

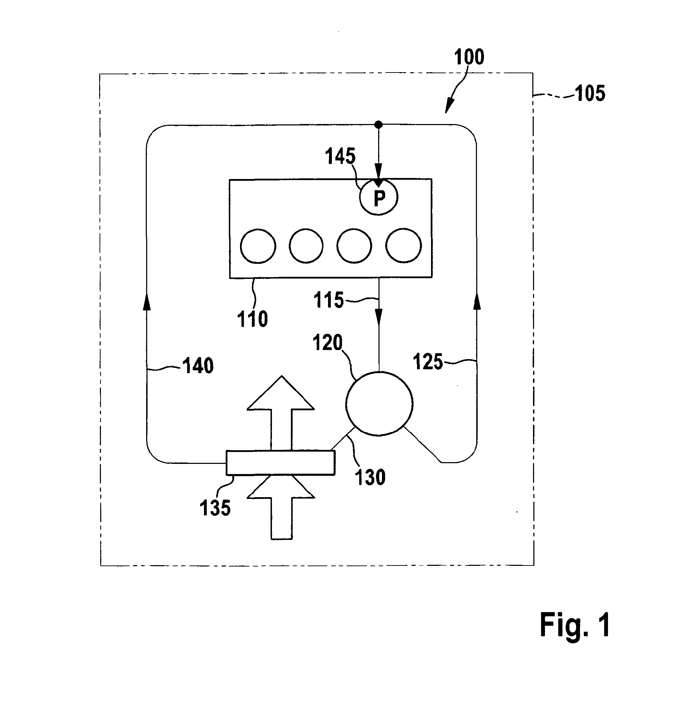

Fig. 1 zeigt einen schematischen Überblick über einen Kühlmittelkreislauf 100 an Bord eines Kraftfahrzeugs 105. Von einem Antriebsmotor 110, der dazu eingerichtet ist, das Kraftfahrzeug 105 anzutreiben, verläuft eine erste Kühlmittelleitung 115 zu einem Drehschieberventil 120. Der Antriebsmotor 110 ist vorzugsweise ein Verbrennungsmotor. In Abhängigkeit einer Temperatur von Kühlmittel, welches durch die erste Kühlmittelleitung 115 zum Drehschieberventil 120 strömt, verteilt das Drehschieberventil 120 das Kühlmittel auf die zweite Kühlmittelleitung 125 und die dritte Kühlmittelleitung 130.

Die zweite Kühlmittelleitung 125 führt zurück zum Antriebsmotor 110. Ein so genannter "kleiner Kühlmittelkreislauf" verläuft vom Antriebsmotor 110 durch die erste Kühlmittelleitung 115, das Drehschieberventil 120 und die zweite Kühlmittelleitung 125 zurück zum Antriebsmotor 110.

Die dritte Kühlmittelleitung 130 führt Kühlmittel zum Radiator 135, der als Wärmetauscher ausgeführt ist, um eine Wärme des flüssigen Kühlmittels an eine Umgebungsluft abzugeben. Eine vierte Kühlmittelleitung 140 führt vom Radiator 135 zurück zum Antriebsmotor 110. Ein so genannter "großer Kühlmittelkreislauf" verläuft vom Antriebsmotor 110 durch die erste Kühlmittelleitung 115, das Drehschieberventil 120, die dritte Kühlmittelleitung 130, den Radiator 135 und die vierte Kühlmittelleitung 140 zurück zum Antriebsmotor 110. Eine Kühlmittelpumpe 145 des Antriebsmotors 110 fördert Kühlmittel durch die Kühlmittelleitungen 115, 125 und 130. Die Kühlmittelpumpe 145 kann in anderen Ausführungsformen an einer anderen Stelle im Kühlmittelkreislauf 100 angeordnet sein, beispielsweise in der ersten Kühlmittelleitung 115. Üblicherweise ist die Kühlmittelpumpe 145 durch den Antriebsmotor 110 angetrieben.

Der Kühlmittelkreislauf 100 kann noch weitere, nicht dargestellte Nebenkreisläufe umfassen, welche wie der Antriebsmotor 110 Wärme in den Kühlmittelkreislauf 100 eintragen oder wie der Radiator 135 Wärme des Kühlmittels an eine Umgebung abgeben. In solchen Nebenkreisläufen können beispielsweise Ölkühler, Ladeluftkühler, eine Innenraumheizung und andere Wärmetauscher angeordnet sein. Weitere Ventile zur Steuerung eines Kühlmittelstroms durch diese Komponenten können zusätzlich vorgesehen sein. In einer Ausführungsform entfällt die zweite Kühlmittelleitung 125 und das Drehschieberventil 120 steuert nur einen Strom von Kühlmittel im großen Kühlmittelkreislauf. In anderen Ausführungsformen ist das Drehschieberventil 120 zusätzlich mit einem oder mehreren der beschriebenen Nebenkreisläufe verbunden und steuert auch einen Strom von Kühlmittel durch die Nebenkreisläufe.

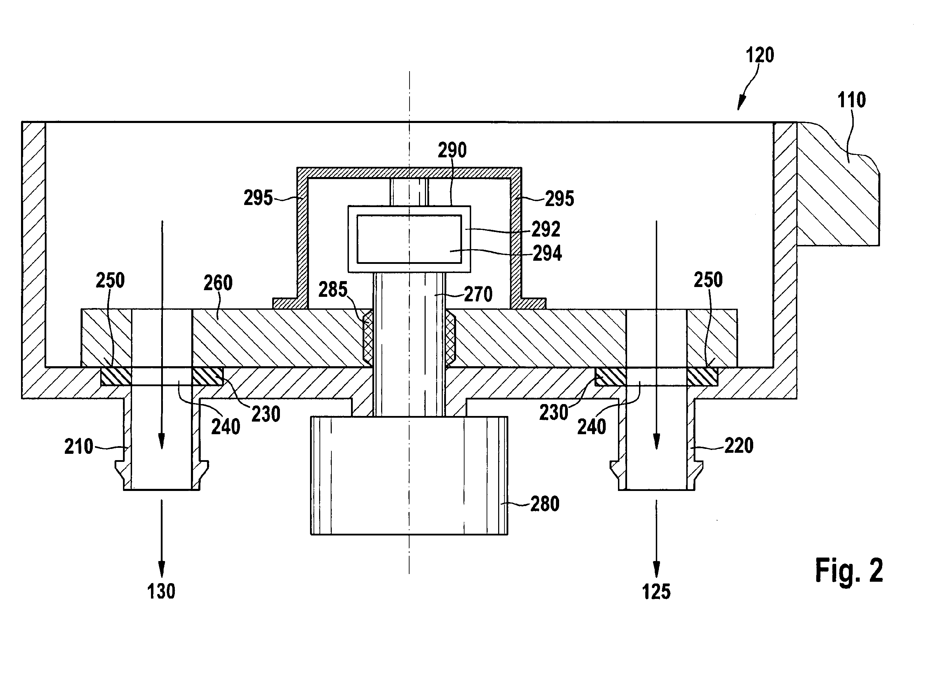

Fig. 2 zeigt einen schematischen Querschnitt durch das Drehschieberventil 120 aus Fig. 1 im Normalbetrieb. Das Drehschieberventil 120 ist teilweise in den oben angedeuteten Antriebsmotor 110 eingelassen. Dadurch entfällt die in Fig. 1 dargestellte erste Kühlmittelleitung 115 und der obere Teil des Drehschieberventils 120 wird unmittelbar von Kühlflüssigkeit umspült, die aus dem Antriebsmotor 110 austritt. Im unteren Bereich umfasst das Drehschieberventil 120 einen ersten Anschluss 210, der mit der dritten Kühlmittelleitung 130 aus Fig. 1 verbunden ist, und einen zweiten Anschluss 220, der mit der zweiten Kühlmittelleitung 125 aus Fig. 1 verbunden ist. Beide Anschlüsse 210 und 220 enden nach oben jeweils an einer Dichtung 230, die eine Öffnung 240 zum Durchlass von Kühlflüssigkeit aufweist. An einem oberen Bereich jeder Dichtung 230 befindet sich eine Anlagefläche 250, an der ein Drehschieber 260 anliegt. Der Drehschieber 260 ist um eine Welle 270, die von einem Verstellmotor 280 angetrieben wird, drehbar angeordnet. Eine Verzahnung 285 stellt eine drehmomentschlüssige aber in vertikaler Richtung verschiebliche Verbindung zwischen der Welle 270 und dem Drehschieber 260 her. An einem oberen Ende der Welle 270, welches dem Verstellmotor 280 bezüglich des Drehschiebers 260 gegenüberliegt, ist ein Ausdehnungskörper 290 angeordnet. Ein oberes Ende des Ausdehnungskörpers 290 liegt an einem Stützelement 295 an, welches den Ausdehnungskörper 290 domartig überspannt und an seinem unteren Ende am Drehschieber 260 befestigt ist. Der Ausdehnungskörper 290 umfasst eine Ummantelung 292 und eine Füllung 294, die aus einer paraffinhaltigen Substanz besteht, beispielsweise Wachs. Der Ausdehnungskörper 290 ist von Kühlmittel umgeben, welches in Kontakt mit dem Antriebsmotor 110 steht, so dass der Ausdehnungskörper 290 in guter Näherung die Temperatur des Antriebsmotors 110 annimmt.

Der Drehschieber 260 weist eine oder mehrere Öffnungen auf, die je nach einer Drehstellung des Drehschiebers 260 mehr oder weniger mit den Öffnungen 240 der Dichtungen 230 fluchten. Dementsprechend ist ein Strom von Kühlmittel vom oberen Bereich des Drehschieberventils 120 durch die Anschlüsse 210 und 220 durch die Drehstellung des Drehschiebers 260 gesteuert. Die Strömungsrichtung bewirkt ein Druckgefälle im Bereich des Drehschiebers 260, so dass der Drehschieber 260 an die Anlageflächen 250 der Dichtungen 230 gepresst wird. Geringe Leckagen in diesem Bereich sind üblicherweise hinnehmbar, so dass auf eine absolute Dichtigkeit der Anlagefläche 250 an dem Drehschieber 260 nicht geachtet werden muss.

Im Normalbetrieb befindet sich der Schieber 260 in der gezeigten vertikalen Position und der Verstellmotor 280 wird mittels des Verstellmotors 280 derart gedreht, dass der Kühlmittelstrom durch die Anschlüsse 210 und 220 in Abhängigkeit einer durch den Antriebsmotor 110 in den Kühlmittelkreislauf 100 eingetragenen Wärme gesteuert wird. Ziel der Steuerung ist es, einen Betriebstemperaturbereich des Antriebsmotors 110 möglichst schnell zu erreichen und im Folgenden auch unter veränderlichen Bedingungen einzuhalten. Während der Steuerung können die Kühlmittelströme durch die Anschlüsse 210 und 220 anders als in Fig. 2 dargestellt einzeln oder beide verschlossen sein.

Besteht nun ein Defekt, so dass der Verstellmotor 280 den Drehschieber 260 nicht mehr verdrehen kann, beispielsweise durch einen mechanischen Defekt, durch einen Fremdkörper im Drehschieberventil 120, durch eine schadhafte Ansteuerung des Verstellmotors 280 oder durch eine Abschaltung etwa durch eine elektrische Sicherung, so kann die Steuerung der Kühlmittelströme nicht mehr mittels Verdrehung des Drehschiebers 160 durchgeführt werden. Je nach Drehstellung des Drehschiebers 260 besteht dann die Gefahr, dass der Kühlmittelstrom durch den Kühlmittelkreislauf 100 insgesamt zu gering ist und der Antriebsmotor 110 überhitzt, was zu Folgeschäden am Antriebsmotor 110 führen kann.

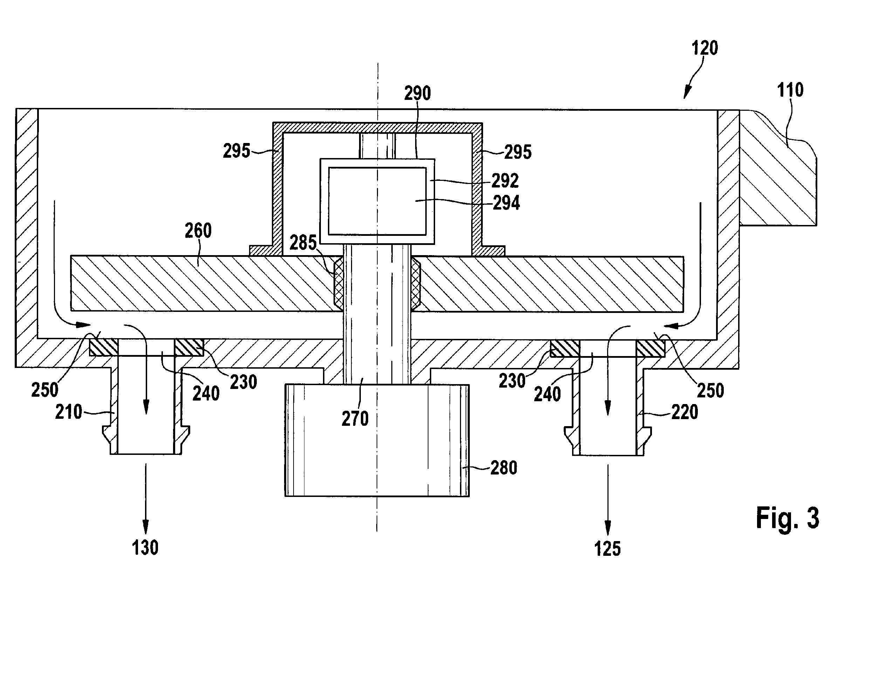

Fig. 3 zeigt einen schematischen Querschnitt durch das Drehschieberventil 120 aus Fig. 1 im Notbetrieb. Der Drehschieber 260 befindet sich in einer Drehstellung, die keinen Kühlmittelstrom durch einen der Anschlüsse 210 oder 220 vorsieht. Diese Drehstellung nimmt der Drehschieber 260 üblicherweise während einer Aufwärmphase des Antriebsmotors 110 ein.

Aufgrund von Wärmeleitung und/oder Wärmekonvektion liegt die Temperatur des Ausdehnungskörpers 290 etwa auf der Höhe der Temperatur des Antriebsmotors 110. Der Antriebsmotor 110 hat seine Betriebstemperatur erreicht, die von ihm in das Kühlmittel eingetragene Wärme wird jedoch aufgrund der Drehstellung des Drehschiebers 260 nicht abgeführt, so dass das Kühlmittel weiter erwärmt wird. Aufgrund der hohen Temperatur hat sich in der Darstellung von Fig. 3 der Ausdehnungskörper 290 ausgedehnt und somit eine in vertikaler Richtung wirkende Hebekraft zwischen dem oberen Ende der Welle 270 und dem oberen Ende des Stützelements 295 erzeugt. Das Stützelement 295 ist mit dem Drehschieber 260 verbunden, so dass durch die Ausdehnung des Ausdehnungskörpers 290 der Drehschieber 260 zusammen mit dem Stützelement 295 auf der Welle 270 nach oben verschoben ist.

Durch diese Verschiebung entlang seiner Drehachse steht der Drehschieber 260 nicht mehr in Kontakt mit den Anlageflächen 250 der Dichtungen 230. Das Kühlmittel aus dem oberen Bereich des Drehschieberventils 120 umfließt den Drehschieber 260 in radialer Richtung und tritt in den Spalt zwischen dem Drehschieber 260 und den Dichtungen 230 ein. Von dort gelangt es durch die Öffnungen 240 und die Anschlüsse 210 bzw. 220 zu den Kühlmittelleitungen 125 bzw. 130 aus Fig. 1. Auf diese Weise kann gewährleistet werden, dass heißes Kühlmittel aus dem oberen Bereich des Drehschieberventils 120 auch dann durch die Anschlüsse 210 und 220 abfließen kann, wenn die Drehstellung des Drehschiebers 260 dies nicht vorsieht und gleichzeitig die Drehstellung nicht adäquat geändert werden kann.

Aufgrund des oben beschriebenen Druckgefälles im Bereich des Drehschiebers 260 ist der Ausdehnungskörper 290 derart ausgelegt, dass er eine Hebekraft auf den Drehschieber 260 auswirken kann, der die durch den Anpressdruck des Druckgefälles bewirkten Kräfte übersteigt. Kühlt der Ausdehnungskörper 290 unter eine weitere vorbestimmte Temperatur ab, so nehmen seine Hebekraft und seine Ausdehnung ab und der Drehschieber 260 nähert sich wieder den Anlageflächen 250 der Dichtungen 230. Auf diese Weise ist ein Zweipunktregler (Thermostat) für den Notbetrieb realisiert. Ist die Verdrehfähigkeit des Drehschiebers 260 wiederhergestellt, etwa weil durch das Abheben ein Fremdkörper fortgespült wurde, so kann wieder in den in Fig. 2 dargestellten Normalbetrieb übergegangen werden, bei dem die Steuerung des Kühlmittelkreislaufs 100 auf Fig. 1 durch Ansteuerung des Verstellmotors 280 bewirkt wird.

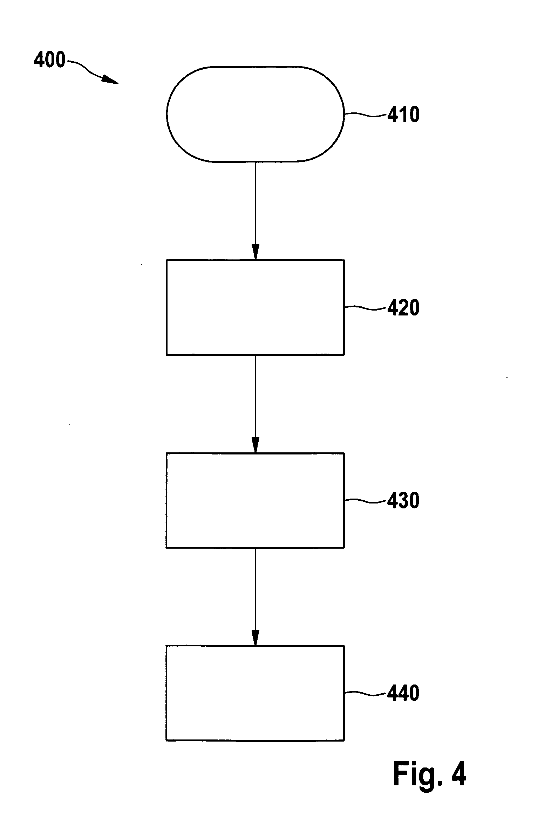

Fig. 4 zeigt ein schematisches Ablaufdiagramm eines Verfahrens 400 zur Steuerung des Drehschieberventils 120 aus den Figuren 2 und 3. In einem ersten Schritt 410 befindet sich das Verfahren 400 im Startzustand. In einem folgenden Schritt 420 wird ein Abheben des Drehschiebers 260 von den Anlageflächen 250 der Dichtungen 230 in den Figuren 2 und 3 erfasst. Dies kann auf der Basis eines in den voranstehenden Figuren nicht dargestellten Sensors oder auf der Basis von Temperaturbeobachtungen im Bereich des Drehschieberventils 120 erfolgen. In einer bevorzugten Ausführungsform wird das Abheben des Drehschiebers 260 auf der Basis einer Kühlmitteltemperatur nahe des Drehschiebers 260 bestimmt.

In einem folgenden Schritt 430 wird eine Warnvorrichtung aktiviert, die einen Fahrer des Kraftfahrzeugs 105 aus Fig. 1 auf den Notbetrieb des Drehschieberventils 120 hinweist. In einer Ausführungsform bleibt die Warnvorrichtung aktiviert, auch wenn das Abheben des Drehschiebers 260 nicht mehr detektiert wird. In einem optionalen folgenden Schritt 440 wird der Antriebsmotor 110 aus Fig. 1 in seiner abgegebenen Leistung begrenzt, beispielsweise durch Begrenzen einer maximalen Drehzahl oder eines maximalen Antriebsmoments, um eine Wärmemenge, die der Antriebsmotor 110 in den Kühlmittelkreislauf 100 einträgt, ebenfalls zu begrenzen. Erfolgt trotz dieser Maßnahmen eine Erhöhung der Temperatur des Antriebsmotors 110 über seine höchste zulässige Betriebstemperatur hinaus, so können weitere Maßnahmen ergriffen werden, beispielsweise ein weiterer optischer und/oder akustischer Alarm, ein Abstellen des Antriebsmotors 110 oder andere.

## Patentansprüche

1. Schieberventil (120) zur Steuerung eines Flüssigkeitsstroms, wobei das Schieberventil (120) folgendes umfasst:
- eine Anlagefläche (250) mit einer Öffnung (240) für den Flüssigkeitsstrom und
- einen an der Anlagefläche (250) anliegenden Schieber (260),
- wobei der Schieber (260) dazu eingerichtet ist, den Flüssigkeitsstrom durch die Öffnung (240) in Abhängigkeit einer Stellung des Schiebers (260) bezüglich der Anlagefläche (250) freizugeben,
**gekennzeichnet durch**
- ein Hubelement (290), das dazu eingerichtet ist, den Schieber (260) von der Anlagefläche (250) abzuheben, falls eine Temperatur des Hubelements (290) eine vorbestimmte Temperatur übersteigt.

2. Schieberventil (120) nach Anspruch 1, **dadurch gekennzeichnet, dass** das Hubelement (290) dazu eingerichtet ist, den Schieber (260) an die Anlagefläche (250) anzupressen, falls die Temperatur des Hubelements (290) eine weitere vorbestimmte Temperatur unterschreitet.

3. Schieberventil (120) nach Anspruch 1 oder 2, **dadurch gekennzeichnet, dass** der Schieber ein Drehschieber (260) mit einer Drehachse ist und das Abheben des Drehschiebers (260) von der Anlagefläche (250) durch ein Bewegen des Drehschiebers (260) entlang der Drehachse erfolgt.

4. Schieberventil (120) nach Anspruch 3, **gekennzeichnet durch** eine Verdreheinrichtung (280) mit einer koaxial zur Drehachse verlaufenden Welle (270) zum Drehen des Drehschiebers (260), wobei das Hubelement (290) auf einer von der Verdreheinrichtung (280) abgewandten Seite des Drehschiebers (260) angeordnet ist.

5. Schieberventil (120) nach Anspruch 4, **dadurch gekennzeichnet, dass** das Hubelement einen Ausdehnungskörper (290) umfasst, der zwischen einer Stirnseite der Welle (270) und einem die Stirnseite der Welle überspannenden Stützelement (295) des Drehschiebers angeordnet ist.

6. Schieberventil (120) nach Anspruch 5, **dadurch gekennzeichnet, dass** der Ausdehnungskörper eine Ummantelung (292) mit einer Füllung (294) umfasst, die Paraffin enthält.

7. Schieberventil (120) nach einem der Ansprüche 4 bis 6, **dadurch gekennzeichnet, dass** der Drehschieber (260) und die Welle (270) miteinander in Eingriff stehende Verzahnungen (285) aufweisen.

8. Flüssigkeitsgekühlter Verbrennungsmotor (110), mit einem Schieberventil (120) nach einem der vorangehenden Ansprüche.

9. Verfahren (400) zur Steuerung eines Schieberventils (120) nach einem der vorangehenden Ansprüche, folgende Schritte umfassend:
- Erfassen (420) eines Abhebens des Schiebers (260) von der Anlagefläche (250) und
- Aktivieren (430) einer Warnvorrichtung.

10. Verfahren (400) nach Anspruch 9, wobei eine vom Antriebsmotor (110) in den Kühlmittelstrom eingetragene Wärmeleistung bei erfasstem Abheben des Schiebers (260) von der Anlagefläche (250) begrenzt (440) wird.

## Claims

1. Slide valve (120) for controlling a liquid flow, wherein the slide valve (120) comprises the following:
- a contact surface (250) with an opening (240) for the liquid flow, and
- a slide (260) which bears against the contact surface (250),
- wherein the slide (260) is designed to permit the liquid flow through the opening (240) as a function of a position of the slide (260) relative to the contact surface (250), **characterized by**
- a lifting element (290) which is designed to lift the slide (260) from the contact surface (250) if a temperature of the lifting element (290) exceeds a predetermined temperature.

2. Slide valve (120) according to Claim 1, **characterized in that** the lifting element (290) is designed to press the slide (260) against the contact surface (250) if the temperature of the lifting element (290) falls below a further predetermined temperature.

3. Slide valve (120) according to Claim 1 or 2, **characterized in that** the slide is a rotary slide (260) with an axis of rotation and the lifting of the rotary slide (260) from the contact surface (250) is realized by means of a movement of the rotary slide (260) along the axis of rotation.

4. Slide valve (120) according to Claim 3, **characterized by** a rotation device (280) with a shaft (270), which runs coaxially with respect to the axis of rotation, for rotating the rotary slide (260), wherein the lifting element (290) is arranged on a side, which faces away from the rotation device (280), of the rotary slide (260).

5. Slide valve (120) according to Claim 4, **characterized in that** the lifting element comprises an expansion body (290) which is arranged between an end side of the shaft (270) and a support element (295), which overspans the end side of the shaft, of the rotary slide.

6. Slide valve (120) according to Claim 5, **characterized in that** the expansion body comprises a casing (292) with a filling (294) containing paraffin.

7. Slide valve (120) according to one of Claims 4 to 6, **characterized in that** the rotary slide (260) and the shaft (270) have intermeshing toothings (285).

8. Liquid-cooled internal combustion engine (110) having a slide valve (120) according to one of the preceding claims.

9. Method (400) for controlling a slide valve (120) according to one of the preceding claims, comprising the following steps:
- detecting (420) lifting of the slide (260) from the contact surface (250), and
- activating (430) a warning device.

10. Method (400) according to Claim 9, wherein a heat output transmitted from the drive engine (110) into the coolant flow is limited (440) upon the detection of lifting of the slide (260) from the contact surface (250).

## Revendications

1. Soupape à tiroir (120) pour diriger un flux de liquide, la soupape à tiroir (120) comportant les éléments suivantes :
- une surface d'appui (250) dotée d'une ouverture (240) pour le flux de liquide et
- un tiroir (260) s'appliquant contre la surface d'appui (250),
- le tiroir (260) étant conçu pour libérer le flux de liquide à travers l'ouverture (240) en fonction d'une position du tiroir (260) par rapport à la surface d'appui (250),
**caractérisée par**
- un élément de levage (290) qui est conçu pour soulever le tiroir (260) de la surface d'appui (250) si une température de l'élément de levage (290) dépasse une température prédéfinie.

2. Soupape à tiroir (120) selon la revendication 1, **caractérisée en ce que** l'élément de levage (290) est conçu pour presser le tiroir (260) contre la surface d'appui (250) si la température de l'élément de levage (290) passe en dessous d'une autre température prédéfinie.

3. Soupape à tiroir (120) selon la revendication 1 ou 2, **caractérisée en ce que** le tiroir est un tiroir rotatif (260) doté d'un axe de rotation, et le soulèvement du tiroir rotatif (260) de la surface d'appui (250) s'effectue au moyen d'un déplacement du tiroir rotatif (260) le long de l'axe de rotation.

4. Soupape à tiroir (120) selon la revendication 3, **caractérisée par** un dispositif de rotation (280) doté d'un arbre (270) s'étendant coaxialement à l'axe de rotation pour faire tourner le tiroir rotatif (260), l'élément de levage (290) étant disposé sur un côté du tiroir rotatif (260) opposé au dispositif de rotation (280).

5. Soupape à tiroir (120) selon la revendication 4, **caractérisée en ce que** l'élément de levage comporte un corps de dilatation (290) qui est disposé entre un côté frontal de l'arbre (270) et un élément de support (295) du tiroir rotatif recouvrant le côté frontal de l'arbre.

6. Soupape à tiroir (120) selon la revendication 5, **caractérisée en ce que** le corps de dilatation comporte une enveloppe (292) pourvue d'un remplissage (294) qui contient de la paraffine.

7. Soupape à tiroir (120) selon l'une quelconque des revendications 4 à 6, **caractérisée en ce que** le tiroir rotatif (260) et l'arbre (270) comprennent des dentures (285) en prise l'une avec l'autre.

8. Moteur à combustion interne (110) refroidi par liquide, comprenant une soupape à tiroir (120) selon l'une quelconque des revendications précédentes.

9. Procédé (400) de commande d'une soupape à tiroir (120) selon l'une quelconque des revendications précédentes, comportant les étapes suivantes :
- détection (420) d'un soulèvement du tiroir (260) de la surface d'appui (250) et
- activation (430) d'un dispositif d'avertissement.

10. Procédé (400) selon la revendication 9, dans lequel une puissance calorifique introduite dans le flux de réfrigérant par le moteur d'entraînement (110) est limitée (440) lorsqu'un soulèvement du tiroir (260) de la surface d'appui (250) est détecté.
